Europäisches Patentamt

(19) European Patent Office

Office européen des brevets

(11) Publication number: 0 113 414
A2

# (12) EUROPEAN PATENT APPLICATION

(21) Application number: 83111646.2

(22) Date of filing: 22.11.83

(51) Int. Cl.³: G 02 F 1/133
G 09 G 3/36

(30) Priority: 10.01.83 US 456953

(43) Date of publication of application:
18.07.84 Bulletin 84/29

(84) Designated Contracting States:
DE FR GB

(71) Applicant: International Business Machines Corporation
Old Orchard Road
Armonk, N.Y. 10504(US)

(72) Inventor: Depp, Steven Wade
PO Box 402
Goldens Bridge New York 10526(US)

(72) Inventor: Eldridge, Jerome Michael
20568 Lomita Avenue
San Josem California 95070(US)

(72) Inventor: Juliana, Anthony, Jr.
1028 Fleetwood Avenue
Saratoga California 95120(US)

(72) Inventor: Lee, Michael Heino
715 Seawood Way
San Jose California 95120(US)

(74) Representative: Hobbs, Francis John
IBM United Kingdom Patent Operations Hursley Park
Winchester, Hants, SO21 2JN(GB)

(54) Matrix-addressed smectic liquid crystal display device.

(57) A matrix-addressed smectic liquid display device (MASD) comprises a smetic liquid crystal material confined between a pair of closely spaced apart substrates (16, 18) of transparent insulating material. A first array of spaced highly conductive row lines (30) is disposed on a transparent highly resistive thin film (32) deposited on the interior surface (34) of one of the substrates (16). A second array of spaced column lines (26) is disposed on the interior surface (28) of the other substrate (18). Circuit means (40, 48, 50, 52) are provided to drive both ends of selected row electrodes with a voltage source to cause heating of the area of the highly resistive transparent material between the selected row line and an adjacent row line which has a reference potential connected to both ends. The heating causes the adjacent liquid crystal material to change from the smectic to at least the nematic state. A source of image signals (42) is coupled (44, 46, 54) to the column lines (26) as the liquid crystal material is cooling to selectively produce a clear or scattered state in the liquid crystal material. The row lines (30) are sequentially energized in conjunction with the appropriate image data to produce a desired display image.

FIG.3

SA9-82-033                              1

MATRIX-ADDRESSED SMECTIC LIQUID
CRYSTAL DISPLAY DEVICE

This invention relates to an improved matrix-addressed smectic
liquid crystal display device.

One recent display technology which has attracted considerable
interest is the matrix-addressed smectic display (MASD). The (MASD)
device is simply a smectic liquid crystal sandwiched between two
insulating substrates, one of which is transparent. On one substrate,
an array of resistive lines are sequentially heated to transform the
adjacent liquid crystal from the smectic state to the nematic or
isotropic state. As each heated strip of liquid crystal cools back to
the smectic state, a pattern of voltages applied to a perpendicular
array of field lines on the opposing substrate determines which areas of
the liquid crystal will scatter light and which will be clear. The
resistive lines are generally aluminum and also act as a reflector,
while the field lines are transparent indium-tin oxide (ITO) deposited
on the transparent substrate. The display is viewed either directly
(sometimes with dyes incorporated in the LC) or projected in reflection
with a Schlieren system which gives the scattering areas contrast.

While the MASD technology has many advantages, it also has certain
limitations owing to the reflective nature of the display which has
limited its application. In particular, for projection, an off-axis
optical system is used which requires a very large-field projection
lens, an expensive item especially when high resolution is also
required. In addition, it is necessary to make the heater lines highly
reflecting and all other optical interfaces highly anti-reflecting in
order to maintain high contrast.

The invention seeks to provide a transparent MASD device which is
especially suitable for operation in a transmissive projection mode.
The transmissive projection mode is preferable since only a simple, inexpensive on-axis projection system is required and contrast-degrading reflections are minimized.

A matrix addressed smectic liquid crystal display device comprising a smectic liquid crystal material confined between a pair of substrates of insulating material, a first array of spaced electrode lines supported on the interior surface of one of the pair of substrates and a second array of spaced electrode lines supported on the interior surface of the other substrate of the pair, said other substrate being transparent, the lines of the first and second arrays being disposed mutually perpendicular to each other, first circuit means to energise selected lines of the first array so to heat the liquid crystal material adjacent thereto that the material changes from the smectic state to at least the nematic state and second circuit means to energise selected lines of the second array as the liquid crystal material cools to determine which areas of the material scatter light and which areas are clear is characterised, according to the invention, by said one of the pair of substrates also being transparent and by the lines of the first array being highly conductive and disposed on a transparent highly resistive film deposited on said one of the pair of substrates.

How the invention can be carried out will now be described by way of example, with reference to the accompanying drawings, in which:-

FIG. 1 is a partly schematic and partly broken away representation of a display device embodying the invention;

FIG. 2 is a graphical representation of different signals showing their relative timing in the operation of the display device of FIG. 1;

FIG. 3 is a partial sectional view on lines 3-3 of FIG. 1;

FIG. 4 is a diagrammatic schematic view of the row drivers in the display device of FIG. 1; and

FIG. 5 is a diagrammatic view of a transmissive projection system including the display device embodying the invention.

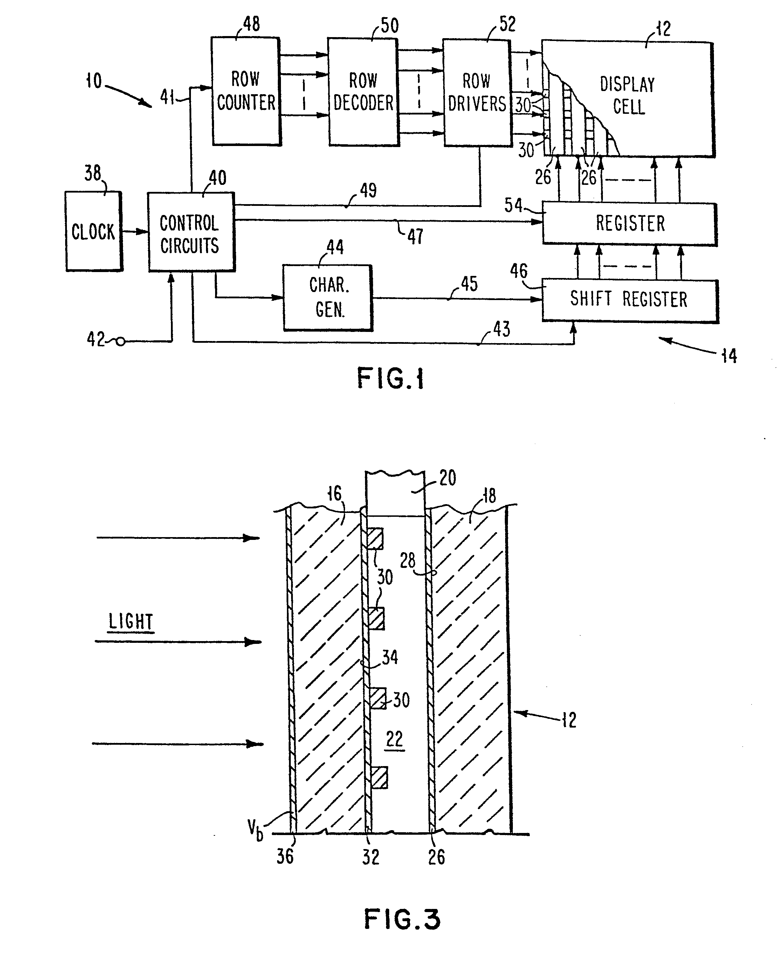

A matrix-addressed liquid crystal display device 10 (FIG. 1) includes a display cell 12 and drive circuitry 14 coupled to drive the display cell 12 in a matrix-addressed mode of operation. The display cell 12 includes two nonconductive transparent substrates 16, 18 such as glass, for example, disposed in closely spaced parallel opposed relationship and separated by a peripherally extending spacer member 20 which sealingly engages the substrates 16, 18 about their peripheries to maintain them in a desired spaced relationship and provide an interior cavity 22 between the two spaced apart substrates 16, 18. The cavity 22 is filled with a suitable liquid crystal material which has a threshold thermal characteristic for producing scattering centers or clearing in response to a voltage signal.

A plurality of vertically extending or column electrodes 26 are disposed in parallel spaced relationship on the interior surface 28 of substrate 18, and a plurality of row electrodes 30 are disposed in electrical contact with a thin film 32 of a highly resistive transparent material formed on the interior surface 34 of substrate 16. One example of a highly resistive transparent material is tin oxide. In one suitable process, the film of tin oxide is deposited on the substrate 18 by starting with a tin oxide target and R.F. sputtering the tin oxide at a temperature in excess of 200°C in an argon-oxygen atmosphere. There must be sufficient oxygen in the atmosphere so that the tin oxide film is saturated with oxygen i.e. no free tin. A film having a sheet resistance of about 100,000 ohms per square can be produced in this manner.

An alignment layer or a contrast enhancing dopant has been used in some prior art display cells to stabilize the scattering structure. Should an alignment layer be considered desirable in a display cell embodying the invention, the alignment layer would be deposited as the top layer on the surfaces of substrates 16, 18 which are in contact with the liquid crystal material. The electrodes 26 and 30 extend through the display region and define a matrix of display elements, each display element being disposed at a unique intersection of a combination of one column electrode 26 and two adjacent row electrodes 30. While the number and relative spacing of the column and row electrodes 26, 30 may depend upon a particular application for which the display cell 12 is designed, in general, a large number of column and row electrodes 26, 30 are deposited with very close spacing to obtain a high resolution. A resolution of about 394 pels per cm (1000 pels per inch) can be achieved with the display cell 12. The size and shape of each display element is determined by the size and shape of the coextensive cross over of two adjacent rows and a column electrode.

The column electrodes 26 are formed by producing a thin film of a conductive transparent material such as indium-tin-oxide (ITO) on the interior surface 28 of substrate 16 and selectively etching the ITO film using conventional etching techniques. The method for depositing an ITO film is well known, and the ITO film for the column electrodes 26 preferably has a sheet resistance of about 100 ohms per square. The row electrodes 30 carry more current so these electrodes are relatively thicker and, in addition, should be constructed of a highly conductive material which is inert to the liquid crystal material such as aluminum, for example. The high conductivity of the electrodes 30 permits cross-talk between display elements to be substantially eliminated by allowing the voltage at all locations along each electrode 30 to be controlled by the electronic circuitry and to be substantially independent of the information being displayed. At the same time, the row electrodes 30 are sufficiently narrow that they are almost invisible and have very little effect on the viewing of displayed information.

A number of competing factors are involved in determining the optimum spacing between the substrates 16, 18 and the chemical composition of the liquid crystal material. In general, it is desirable that the liquid crystal material be a mixture that is stable to moisture and light, can be heated and cooled many times without deterioration, gives very high contrast images, has indefinite storage once written, and can easily be erased either selectively or totally as desired. One liquid crystal material which shows these properties is a ternary mixture of liquid crystal compounds. The mixture comprises 4-n-octyloxy-4'-cyanobiphenyl, 4-n-decyl-4'-cyanobiphenyl, and 4-n-undecyl-4'-cyanobiphenyl.

The preferred liquid crystal material has characteristics which include a wide smectic range and a narrow nematic range so that the display cell can be thermally biased to a point at or below the higher end of the smectic range. This liquid crystal material permits operation to produce a selective display with only the limited energy input required for heating a localized area to at least the nematic range and selectively applying a suitable potential across the localized area as it cools to the smectic state. If a suitable potential is applied across the localized area as it cools to the smectic state then the area freezes in the clear state, but if no potential is applied across the localized area as it cools to the smectic state, then the area freezes in a scattering state.

The thermal biasing of display cell 12 is accomplished by depositing a thin film 36 of a transparent conductive material such as ITO on the surface of substrate 18 opposite surface 34, and energizing the film with a suitable voltage to produce heating so that the liquid crystal material in cavity 22, which is in contact with substrate 18, is maintained at a temperature just below the smectic to nematic transition. The additional energy required to heat the liquid crystal material to the nematic or isotropic range is produced by applying a voltage between selected adjacent row electrodes 30. The part of the thin film 32 between the selected row electrodes is initially deposited with a chosen sheet resistance such as 100,000 ohms per square, for example, so that this resistance, along with the applied voltage, produces sufficient current to heat the liquid crystal material between
the selected row electrodes and to produce the transition of that liquid
crystal material from the smectic state at least to the nematic state.
It is probable that many of the incremental areas between the selected
row electrodes 30 are heated to the isotropic state, but this does not
adversely affect the operation of the cell so long as all selected areas
are heated at least to the nematic state. Once heating of the selected
area has been accomplished the voltage source is removed so that the
selected areas begin to cool. The signals representing the image to be
displayed for the selected row are coupled to the column electrodes 26
so that the image signals are present on the column electrodes when the
selected area of liquid crystal material cools to the smectic state. In
this manner, the chosen image is stored in the display cell 12 one scan
line or row at a time.

The drive circuitry 14 is shown in somewhat simplified form in FIG.
1 and includes a clock generator 38 and control circuits 40 coupled to
receive a display signal input 42 which may be supplied by a
microprocessor or any other source of characters or other image data to
be displayed. The signal source may also include a character display
storage which stores the characters to be displayed and sequentially
presents these signals a line at a time under control of control
circuits 40 to a character generator 44. Character generator 44
produces successive groups of serial data signals known as scan lines
which are loaded into shift register 46. A scan line includes one
matrix row of each of the characters in the line to be displayed. Image
data other than character data is also processed in the same manner one
matrix row at a time.

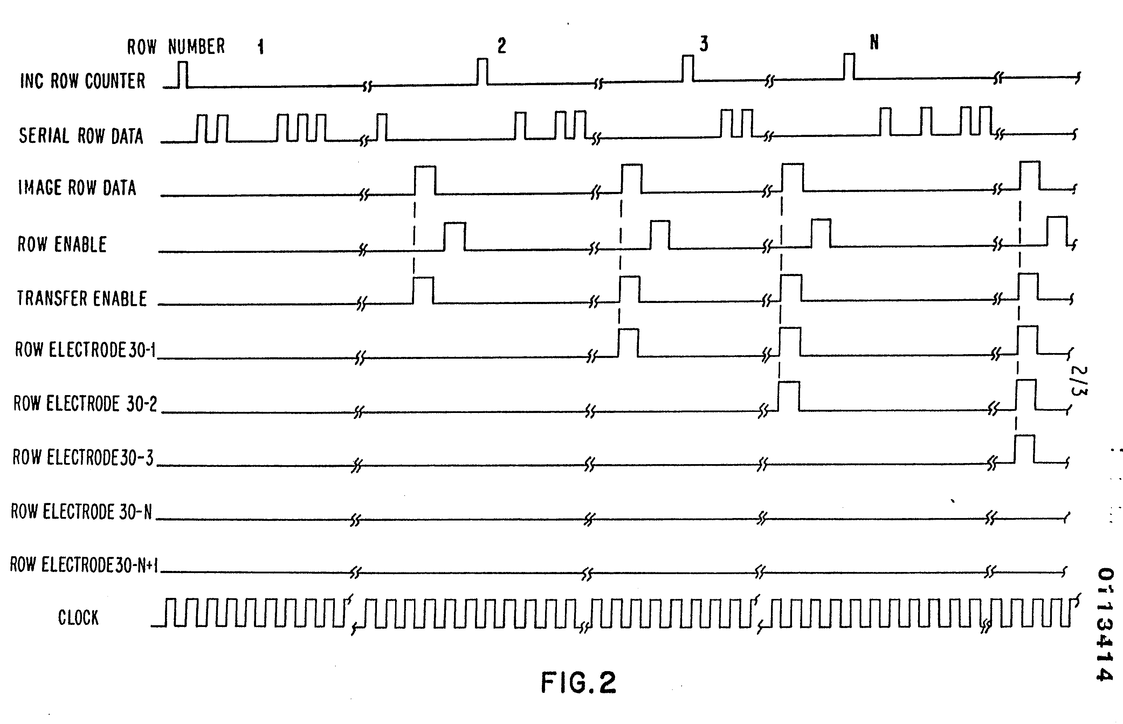

Control circuits 40 comprise conventional logic circuits arranged
to generate the control signals shown in FIG. 2. In those cases in
which a microprocessor is coupled to the display system, the
microprocessor can alternatively be programmed to provide the control
signals. The signal INC ROW COUNTER is coupled on line 41 to row counter 48 to control the particular row electrode 30 to be energized.
Row counter 48 is reset to zero at the start of a display cycle and its
output is coupled to row decoder 50. Row drivers 52 comprise one driver
for each row electrode 30, and both ends of row electrodes 30 are driven
in the preferred embodiment to minimize the voltage drop down these
lines and thereby minimize variations in the voltage across the ITO.
The signal SERIAL ROW DATA enables the transfer on line 45 of data for
one scan line from character generator 44 to shift register 46. Once
the data is entered into the shift register, in conjunction with the
CLOCK signal on line 43, the signal ROW ENABLE is coupled on line 49 to
row drivers 52 so that the selected row electrode 30 is energized.

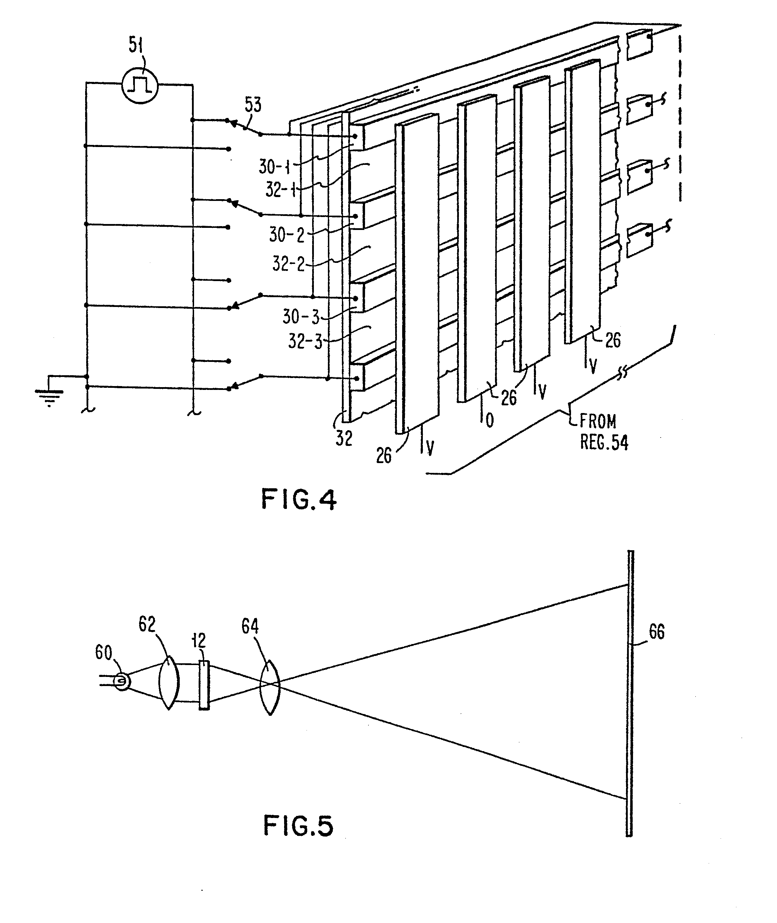

All row drivers 52 are initially set so that a ground potential is
applied to each end of all the row electrodes 30. This operation is
shown diagrammatically in FIG. 4 in which each of the drivers 52
includes switching means 53. In the OFF position, the row electrode 30
is connected by switching means 53 to a reference potential such as
ground potential. In the ON position, each of the switching means 53
connects a voltage source 51 to the row electrode 30. The magnitude and
duration of the output from voltage source 51 is predetermined, in
conjunction with the known resistance of film 32, to produce sufficient
current for $I^2R$ heating of the associated area of film 32. The heating
causes the adjacent liquid crystal material to go from the smectic to at
least the nematic phase so that the information can be written into the
display cell 12 corresponding to the image signals then in register 54.

In response to the ROW ENABLE signal, the row driver 52 selected by
row decoder 50 is energized so that a voltage of a selected magnitude is
coupled to each end of the selected row electrode 30. This voltage to
the first row electrode 30-1 (FIG. 4) in conjunction with the grounded
second row electrode 30-2 causes current to flow in the area 32-1 of the
film 32 which extends between row electrodes 30-1 and 30-2 so that the
resulting $I^2R$ heating causes the adjacent liquid crystal material to be
heated. The selected row drivers 52 are maintained ON for a time sufficient to produce heating of the liquid crystal material at least up to the nematic state and then turned OFF so that the liquid crystal material cools back to the smectic state.

As the liquid crystal material is being heated the signal TRANSFER ENABLE is generated and coupled on line 47 to cause the contents of shift register 46 to be transferred broadside to register 54. The contents of register 54 comprises a signal for each stage having a magnitude of a predetermined level V or zero. The contents of register 54 are coupled to the associated column electrodes 26 and thus are present when the liquid crystal material cools. In those incremental areas bounded by row electrodes 30-1 and 30-2 and a column electrode 26 having a signal of the predetermined level, the incremental area freezes in the clear state due to the presence of the potential of the predetermined level when the liquid crystal material cools to the smectic state. In those incremental areas bounded by row electrodes 30-1 and 30-2 and a column electrode 26 having a zero level signal thereon, the incremental area freezes in the scattering state due to the presence of no voltage when the liquid crystal material cools to the smectic state.

At this point in the operation another INC ROW COUNTER is generated to start the recording of the second scan line of display data. In this case the signal causes row counter 48 to be incremented so that row decoder 50 produces, at the appropriate point in the operation, signals to energize row drivers for row electrodes 30-1 and 30-2 with a voltage of the preselected magnitude. These signals cause current to flow in the area 32-2 of the film 32 which extends between row electrodes 30-2 and 30-3 and the adjacent liquid crystal material to be heated so that the second scan line of the display image can be produced. The switching means 53 in FIG. 4 are set to record the second scan line as shown.

Operation continues in this manner sequentially through all row electrodes 30 so that the entire display image can be produced. It will be noted with reference to FIG. 2 that no driver is required for row electrode 30-N+1 since this electrode is always maintained at ground potential. The ground potential on row electrode 30-N+1 in conjunction with a voltage on row electrode 30-N enables the last display row in area 32-N to be produced.

Once the desired image has been produced in display cell 12 as described above, the image remains for an extended period of time without the requirement of periodic refreshing. The image can also be projected to a much larger size by the use of a simple, inexpensive, on-axis projection system such as the apparatus shown in FIG. 5. The apparatus comprises a suitable light source 60 such as a projection lamp, for example, whose light is substantially collimated by collimator 62. The substantially collimated light illuminates display cell 12 and the transmitted optical image is directed to a suitable projection lens 64 for projection onto a suitable screen 66. The image produced on screen 66 is a high contrast image since no contrast-degrading optical elements are required.

In a specific example a display cell was built according to the above description having a cell thickness of about 15-20 microns and having a resolution of 157 pels per cm (400 pels/inch). The liquid crystal material had a smectic to nematic transition at about 60°C and the cell was biased to a temperature of about 55°C by the use of a voltage $V_b$ of about 10-15 volts applied to the thin film 36 on substrate 18. The image was projected at ten times size, and contrast ratios in such cells have been in excess of ten. As stated earlier, a resolution of 394 pels per cm (1000 pels/inch) can be achieved with this cell structure.

The display cell is also usable as a color display cell with slight modification to the system. The modification comprises the addition of color filter strips at the same pitch as the row electrodes in a repeating red-blue-green pattern.

The main advantage of the invention is to provide a transparent matrix-addressed smectic display (MASD) device which permits use in a transmissive projection mode. A supplementary advantage of the invention is that undesirable contrast-degrading reflections are avoided while maintaining conventional MASD current/voltage requirements.

CLAIMS

1.   A matrix addressed smectic liquid crystal display device comprising
a smectic liquid crystal material confined between a pair of substrates
(16, 18) of insulating material, a first array of spaced electrode
lines (30) supported on the interior surface (34) of one (16) of the pair of
substrates and a second array of spaced electrode lines (26) supported
on the interior surface (28) of the other substrate (18) of the pair,
said other substrate (18) being transparent, the lines of the first and
second arrays being disposed mutually perpendicular to each other, first
circuit means (40, 48, 50, 52) to energise selected lines of the first
array so to heat the liquid crystal material adjacent thereto that the
material changes from the smectic state to at least the nematic state
and second circuit means (40, 44, 46, 54) to energise selected lines of
the second array as the liquid crystal material cools to determine which
areas of the material scatter light and which areas are clear
characterised by said one (16) of the pair of substrates also being
transparent and by the lines (30) of the first array being highly
conductive and disposed on a transparent highly resistive film (32)
deposited on said one (16) of the pair of substrates.

2.   A display device as claimed in claim 1, in which the transparent
highly resistive film has a sheet resistance of about 100,000 ohms per
square.

3.   A display device as claimed in claim 1 or claim 2, in which the
transparent highly resistive film is a tin oxide film.

4.   A display device as claimed in claim 3, in which the lines of the
first array are of a material having a sheet resistance of about 100
ohms per square.

5.   A display device as claimed in claim 4, in which the lines of the
first array are of indium-tin oxide.

6.   A display device as claimed in any preceding claim, further comprising a film (36) of transparent conductive material disposed on the opposite side of said one of the pair of substrates to the side on which the highly resistive film is disposed and means to apply a bias voltage to the film of transparent conductive material to raise the liquid crystal material to a temperature near to but below a threshold temperature at which the liquid crystal material changes from the smectic to the nematic state.

7.   A display device as claimed in any preceding claim, in which said first circuit means comprises means for connecting a voltage source (51) of predetermined amplitude and duration to both ends of a first selected line of the first array to cause heating of the adjacent liquid crystal material between said first selected line and an adjacent line of the first array connected to a reference voltage.

8.   A display device as claimed in any preceding claim, wherein said second circuit means comprises a source of image pattern signals.

FIG.1

FIG.3

FIG.2

FIG.4

FIG.5